# EUROPEAN PATENT APPLICATION

(11) **EP 4 722 063 A1**
(43) Date of publication of application: **08.04.2026**
(21) Application number: 24847762.2
(22) Date of filing: 05.06.2024
(51) Int. Cl.: B60W 30/06, B60W 30/08

(54) **CONTROL METHOD AND APPARATUS, AND INTELLIGENT DRIVING DEVICE**

(30) Priority: 28.07.2023 CN 202310954423
(71) Applicant: Shenzhen Yinwang Intelligent Technologies Co., Ltd., Shenzhen, Guangdong 518110 (CN)
(72) Inventor: QIN, Cai, Shenzhen, Guangdong 518129 (CN); SHEN, Yujie, Shenzhen, Guangdong 518129 (CN); JIANG, Yu, Shenzhen, Guangdong 518129 (CN)
(74) Representative: MERH-IP Matias Erny Reichl Hoffmann Patentanwälte PartG mbB
(86) International application number: PCT/CN2024/097460
(87) International publication number: WO 2025/025799

(57) **Abstract**

A control method and apparatus, and an intelligent driving device are provided. The method includes: obtaining a type and a position of a first obstacle, where the type indicates that the first obstacle is a low obstacle or a negative obstacle, the low obstacle is an obstacle whose highest point is higher than a plane on which a vehicle is located and lower than a plane on which a chassis of the vehicle is located, and the negative obstacle is an obstacle whose highest point is lower than the plane on which the vehicle is located; and performing at least one of the following based on the type and the position of the first obstacle: controlling a speed of the vehicle and controlling a pose of the vehicle. The method in this application may be applied to an intelligent vehicle like an electric vehicle or a new energy vehicle. During traveling or parking of the vehicle, a pose and/or a speed of the vehicle can be controlled based on a position of a negative obstacle or a low obstacle, to prevent the vehicle from falling into the negative obstacle or colliding with the low obstacle. This helps improve vehicle safety and ensure personal and property safety of a user.

## Description

This application claims priority to Chinese Patent Application No. 202310954423.6, filed with the China National Intellectual Property Administration on July 28, 2023 and entitled "CONTROL METHOD AND APPARATUS, AND INTELLIGENT DRIVING DEVICE", which is incorporated herein by reference in its entirety.

### TECHNICAL FIELD

This application relates to the field of intelligent driving, and more specifically, to a control method and apparatus, and an intelligent driving device.

### BACKGROUND

With rapid development of the automotive industry, many assisted driving technologies and autonomous driving technologies emerge, so that driving pressure can be reduced, and safety and traffic efficiency can be improved. Automatic parking (auto parking, AP) is a widely used assisted driving technology. AP means automatic parking of a vehicle, that is, an autonomous driving system may semi-automatically or fully automatically help a user park the vehicle into a parking space. Automatic parking may include automatic parking assist (auto parking assist, APA), remote parking assist (remote parking assist, RPA), automated valet parking (auto valet parking, AVP), and the like.

However, a current automatic parking system can usually identify only an obstacle located on or above a plane on which a vehicle is located. As a result, if there is a drainage ditch along a roadside during parking, the system cannot identify the drainage ditch, causing vehicle scratching and falling and other problems.

In view of this, a control solution that can improve vehicle safety urgently needs to be developed.

### SUMMARY

This application provides a control method and apparatus, and an intelligent driving device. During traveling or parking of the intelligent driving device like a vehicle, a pose and/or a speed of the vehicle can be controlled based on a position of a negative obstacle or a low obstacle, to prevent the vehicle from falling into the negative obstacle or colliding with the low obstacle. This helps improve vehicle safety and ensure personal and property safety of a user.

According to a first aspect, a control method is provided. The method may be performed by a vehicle, or may be performed by a computing platform of the vehicle, or may be performed by a chip or a circuit used in the vehicle. This is not limited in this application.

The method includes: obtaining a type and a position of a first obstacle, where the type indicates that the first obstacle is a low obstacle or a negative obstacle, the low obstacle is an obstacle whose highest point is higher than a plane on which the vehicle is located and lower than a plane on which a chassis of the vehicle is located, and the negative obstacle is an obstacle whose highest point is lower than the plane on which the vehicle is located; and performing at least one of the following based on the type and the position of the first obstacle: controlling a speed of the vehicle and controlling a pose of the vehicle.

In the foregoing technical solution, the pose and/or the speed of an intelligent driving device can be controlled based on a position of the negative obstacle or the low obstacle. When there is the low obstacle around the vehicle, the vehicle can be prevented from colliding with the low obstacle. When there is the negative obstacle around the vehicle, the vehicle can be prevented from falling into the negative obstacle, thereby avoiding vehicle scratching or even personal injury. This helps improve vehicle safety and ensure personal and property safety of a user.

With reference to the first aspect, in some implementations of the first aspect, controlling the pose of the vehicle includes: controlling a distance between an external contour of a first wheel of the vehicle and the first obstacle to be greater than or equal to a first distance threshold, where the first wheel is a wheel that is in wheels of the vehicle and that is closest to the first obstacle.

In an example, if the first obstacle is located on a side surface of the vehicle, or if the first obstacle is located in an area neighboring to a longer boundary of a target parking area, the external contour of the first wheel is an outermost side in an axial direction of the first wheel.

In another example, if the first obstacle is located in front of or in rear of the vehicle, or if the first obstacle is located in an area neighboring to a shorter boundary of the target parking area, the external contour of the first wheel is an outermost side that is in a circumferential direction of the first wheel and that is away from the center of the vehicle.

For example, the first distance threshold may be 30 centimeters or 20 centimeters, or the first distance threshold may be another value.

In the foregoing technical solution, the pose and/or the speed of the vehicle are/is controlled based on the distance between the external contour of the wheel and the first obstacle or the negative obstacle. This can ensure that the vehicle does not collide with the low obstacle or the vehicle does not fall into the negative obstacle, while also allowing the vehicle to have a larger range of movement. When the vehicle is in a manual driving state, larger space is provided for a driver to control the vehicle. When the vehicle is in an autonomous driving state, calculation complexity of planning a travel route for the vehicle is reduced.

With reference to the first aspect, in some implementations of the first aspect, the method further includes: obtaining a position of a second obstacle, where the second obstacle is a high obstacle and is located in a same area as the first obstacle, and the high obstacle is an obstacle whose highest point is higher than or equal to the plane on which the chassis of the vehicle is located; and controlling the distance between the external contour of the first wheel of the vehicle and the first obstacle to be greater than or equal to the first distance threshold includes: controlling the distance between the external contour of the first wheel of the vehicle and the first obstacle to be greater than or equal to the first distance threshold, and controlling a distance between a first part of an outer contour of the vehicle and the second obstacle to be greater than or equal to a second distance threshold, where the first part is a part that is in the outer contour and that is closest to the second obstacle.

For example, the lowest point of the high obstacle is lower than the roof of the vehicle, or the lowest point of the high obstacle is lower than the lowest point of the bonnet of the vehicle. For example, in some vehicles, the bonnet is a hood (hood) of an engine compartment; and in some vehicles, the bonnet is a front trunk lid or an engine cover.

For example, the second distance threshold may be 30 centimeters, 20 centimeters, or another value.

In the foregoing technical solution, when there are both the high obstacle and the negative obstacle (or the low obstacle) in an area that the vehicle gradually approaches during traveling or in an area neighboring to the target parking area, the two types of obstacles are controlled to respectively keep preset distances from different parts (for example, a vehicle body and a wheel) of the vehicle, to help further improve vehicle safety.

With reference to the first aspect, in some implementations of the first aspect, the first obstacle is located on a first side of the target parking area, and controlling the pose of the vehicle includes: when the vehicle is parked into the target parking area, controlling a distance between a second part of the outer contour of the vehicle and a boundary on a second side of the target parking area to be greater than or equal to a third distance threshold, where the second side is a side opposite to the first side, and the second part is a side opposite to a side on which the first wheel is located.

For example, if the first side of the target parking area is a side that forms a longer boundary of the target parking area, the second side of the target parking area is a side that forms another longer boundary of the target parking area; or if the first side of the target parking area is a side that forms a shorter boundary of the target parking area, the second side of the target parking area is a side that forms another shorter boundary of the target parking area. The first wheel is neighboring to the first side, and the second part of the outer contour of the vehicle is neighboring to the second side.

For example, the boundary on the second side of the target parking area may be a parking space line.

For example, the third distance threshold may be 5 centimeters, 3 centimeters, or another value.

In the foregoing technical solution, during parking, in addition to controlling the distance between the vehicle and the first obstacle to keep a safe distance, it further needs to control the vehicle to be parked into the target parking area, in other words, the distance between the vehicle and the boundary of the target parking area is controlled to be at least greater than or equal to the third preset distance. This can reduce a probability that the vehicle is scratched by a vehicle that is parked into or passes through the area neighboring to the target parking area, and also facilitate traveling or parking of another vehicle.

With reference to the first aspect, in some implementations of the first aspect, the first obstacle is the negative obstacle, and performing at least one of the following: controlling the speed of the vehicle and controlling the pose of the vehicle includes: when the first obstacle is located in a traveling direction of the vehicle and a length of the first obstacle in the traveling direction of the vehicle is greater than or equal to a first preset threshold, or when the first obstacle is located on a side of the vehicle and a length of the first obstacle in a direction perpendicular to the traveling direction of the vehicle is greater than or equal to a second preset threshold, performing at least one of the following based on the position of the first obstacle: controlling the speed of the vehicle and controlling the pose of the vehicle.

For example, the first preset threshold may be 20 centimeters, or may be another value. For example, the first preset threshold may be determined based on a wheel diameter and a chassis height of the vehicle.

For example, the second preset threshold may be a width of the wheel, or may be another value less than the width of the wheel.

In the foregoing technical solution, when the width (or a length) of the negative obstacle is greater than or equal to the preset threshold, and consequently the wheel or the vehicle may fall into the negative obstacle, the pose and/or the speed of the vehicle are/is controlled based on the position of the negative obstacle, to ensure vehicle safety. When the width (or the length) of the negative obstacle is equal to the preset threshold, the wheel does not fall into the negative obstacle, or the wheel falling into the negative obstacle does not cause the chassis of the vehicle to be scratched, so the negative obstacle can be ignored. This helps reduce calculation complexity and energy consumption of planning a route for the vehicle.

With reference to the first aspect, in some implementations of the first aspect, controlling the speed of the vehicle includes: when a distance between the first obstacle and an external contour of a second wheel of the vehicle is greater than a fourth distance threshold, controlling the vehicle to travel at a first acceleration, so that the speed of the vehicle is less than or equal to a first speed threshold when the distance between the first obstacle and the external contour of the second wheel is less than or equal to the fourth distance threshold, where the second wheel is a wheel that is in the wheels of the vehicle and that is closest to the first obstacle.

For example, the fourth distance threshold may be 1.5 meters or 1.2 meters, or may be another value. The first acceleration may be determined based on a real-time speed of the vehicle, and the first acceleration is a negative value. The first speed threshold may be 0.2 meters/second, or may be another value.

For example, the second wheel and the first wheel may be a same wheel.

In the foregoing technical solution, when the first obstacle is detected, the vehicle is controlled to decelerate in advance, so that when approaching the first obstacle, the vehicle can brake in time at a deceleration comfortable for the driver and a passenger, thereby improving driving/riding experience and safety of the driver and the passenger.

With reference to the first aspect, in some implementations of the first aspect, the method further includes: when the first obstacle is the low obstacle, controlling a sound-making apparatus to play a first sound effect; or when the first obstacle is the negative obstacle, controlling the sound-making apparatus to play a second sound effect.

For example, when a high obstacle is detected, the first sound effect or a third sound effect is played.

In the foregoing technical solution, different types of obstacles are indicated by different sound effects, so that the driver can determine a type of an obstacle around the vehicle, and perform different vehicle control operations based on the different types of obstacles in the manual driving state.

With reference to the first aspect, in some implementations of the first aspect, the first obstacle is the negative obstacle, and the method further includes at least one of the following: controlling a prompt apparatus to indicate a distance between the vehicle and the first obstacle; controlling the prompt apparatus to indicate the position of the first obstacle; or controlling the prompt apparatus to indicate that the vehicle has a risk of falling.

In the foregoing technical solution, when the negative obstacle is detected, information associated with the negative obstacle is indicated. This helps prompt the driver with existence of the negative obstacle and related information of the negative obstacle in time, to warn the driver.

With reference to the first aspect, in some implementations of the first aspect, the method further includes: generating a virtual icon based on height information of the first obstacle, where the virtual icon indicates a height of the first obstacle and the position that is of the first obstacle and that corresponds to a position of the plane on which the vehicle is located; and controlling the prompt apparatus to display the virtual icon.

It should be noted that, when the first obstacle is the negative obstacle, the height of the first obstacle may be understood as a depth of the first obstacle.

For example, when the height of the first obstacle can be detected, the virtual icon is generated based on an actual height of the first obstacle. When the height of the first obstacle cannot be detected, it indicates that the depth of the first obstacle is too great. In this case, a default virtual icon may indicate the height of the first obstacle and the position that is of the first obstacle and that corresponds to the position of the plane on which the vehicle is located. The default virtual icon may be set by the user, or may be a factory setting of a system.

In the foregoing technical solution, the height and the position of the negative obstacle are indicated by the virtual icon. This helps the driver more intuitively determine the position and the depth of the negative obstacle, reduces a degree of distraction of attention of the driver, and helps improve driving safety in the manual driving state.

According to a second aspect, a control apparatus is provided. The apparatus includes: an obtaining unit, configured to obtain a type and a position of a first obstacle, where the type indicates that the first obstacle is a low obstacle or a negative obstacle, the low obstacle is an obstacle whose highest point is higher than a plane on which a vehicle is located and lower than a plane on which a chassis of the vehicle is located, and the negative obstacle is an obstacle whose highest point is lower than the plane on which the vehicle is located; and a processing unit, configured to perform at least one of the following based on the type and the position of the first obstacle: controlling a speed of the vehicle and controlling a pose of the vehicle.

With reference to the second aspect, in some implementations of the second aspect, the processing unit is configured to: control a distance between an external contour of a first wheel of the vehicle and the first obstacle to be greater than or equal to a first distance threshold, where the first wheel is a wheel that is in wheels of the vehicle and that is closest to the first obstacle.

With reference to the second aspect, in some implementations of the second aspect, the obtaining unit is further configured to: obtain a position of a second obstacle, where the second obstacle is a high obstacle and is located in a same area as the first obstacle, and the high obstacle is an obstacle whose highest point is higher than or equal to the plane on which the chassis of the vehicle is located; and the processing unit is configured to: control the distance between the external contour of the first wheel of the vehicle and the first obstacle to be greater than or equal to the first distance threshold, and control a distance between a first part of an outer contour of the vehicle and the second obstacle to be greater than or equal to a second distance threshold, where the first part is a part that is in the outer contour and that is closest to the second obstacle.

With reference to the second aspect, in some implementations of the second aspect, the first obstacle is located on a first side of a target parking area, and the processing unit is configured to: when the vehicle is parked into the target parking area, control a distance between a second part of the outer contour of the vehicle and a boundary on a second side of the target parking area to be greater than or equal to a third distance threshold, where the second side is a side opposite to the first side, and the second part is a side opposite to a side on which the first wheel is located.

With reference to the second aspect, in some implementations of the second aspect, the first obstacle is the negative obstacle, and the processing unit is configured to: when the first obstacle is located in a traveling direction of the vehicle and a length of the first obstacle in the traveling direction of the vehicle is greater than or equal to a first preset threshold, or when the first obstacle is located on a side of the vehicle and a length of the first obstacle in a direction perpendicular to the traveling direction of the vehicle is greater than or equal to a second preset threshold, perform at least one of the following based on the type and the position of the first obstacle: controlling the speed of the vehicle and controlling the pose of the vehicle.

With reference to the second aspect, in some implementations of the second aspect, the processing unit is configured to: when a distance between the first obstacle and an external contour of a second wheel of the vehicle is greater than a fourth distance threshold, control the vehicle to travel at a first acceleration, so that the speed of the vehicle is less than or equal to a first speed threshold when the distance between the first obstacle and the external contour of the second wheel is less than or equal to the fourth distance threshold, where the second wheel is a wheel that is in the wheels of the vehicle and that is closest to the first obstacle.

With reference to the second aspect, in some implementations of the second aspect, the processing unit is further configured to: when the first obstacle is the low obstacle, control a sound-making apparatus to play a first sound effect; or when the first obstacle is the negative obstacle, control the sound-making apparatus to play a second sound effect.

With reference to the second aspect, in some implementations of the second aspect, the first obstacle is the negative obstacle, and the processing unit is further configured to perform at least one of the following: controlling a prompt apparatus to indicate a distance between the vehicle and the first obstacle; controlling the prompt apparatus to indicate the position of the first obstacle; or controlling the prompt apparatus to indicate that the vehicle has a risk of falling.

With reference to the second aspect, in some implementations of the second aspect, the apparatus further includes a generation unit, configured to: generate a virtual icon based on height information of the first obstacle, where the virtual icon indicates a height of the first obstacle and the position that is of the first obstacle and that corresponds to a position of the plane on which the vehicle is located; and the processing unit is configured to control the prompt apparatus to display the virtual icon.

According to a third aspect, a control apparatus is provided. The apparatus includes: a memory, configured to store a computer program; and a processor, configured to execute the computer program stored in the memory, to enable the apparatus to perform the method according to any one of the possible implementations of the first aspect.

According to a fourth aspect, an intelligent driving device is provided, and the intelligent driving device includes the apparatus according to any one of the possible implementations of the second aspect or the third aspect.

With reference to the fourth aspect, in some implementations of the fourth aspect, the intelligent driving device is a vehicle.

With reference to the fourth aspect, in some implementations of the fourth aspect, the intelligent driving device includes a sound-making apparatus and/or a prompt apparatus.

According to a fifth aspect, a computer program product is provided. The computer program product includes computer program code. When the computer program code is run on a computer, the computer is enabled to perform the method according to any one of the possible implementations of the first aspect.

It should be noted that all or a part of the computer program code may be stored in a first storage medium. The first storage medium may be encapsulated together with a processor, or may be encapsulated separately from a processor.

According to a sixth aspect, a computer-readable medium is provided. The computer-readable medium stores instructions. When the instructions are executed by a processor, the processor is enabled to implement the method according to any one of the possible implementations of the first aspect.

According to a seventh aspect, a chip is provided. The chip includes a circuit, and the circuit is configured to perform the method according to any one of the possible implementations of the first aspect.

### BRIEF DESCRIPTION OF DRAWINGS

FIG. 1 is a diagram of a parking scenario;
FIG. 2 is a functional block diagram of a vehicle according to an embodiment of this application;
FIG. 3 is a diagram of an architecture of a control system according to an embodiment of this application;
FIG. 4 is a schematic flowchart of a control method according to an embodiment of this application;
FIG. 5 is a diagram of a vehicle collision determining area according to an embodiment of this application;
FIG. 6 is another diagram of a vehicle collision determining area according to an embodiment of this application;
FIG. 7 is a diagram of a parking pose according to an embodiment of this application;
FIG. 8 is another diagram of a parking pose according to an embodiment of this application;
FIG. 9 is another schematic flowchart of a control method according to an embodiment of this application;
FIG. 10 is a diagram of a negative obstacle occupancy grid point according to an embodiment of this application;
FIG. 11 is a diagram of a prompt scenario according to an embodiment of this application;
FIG. 12 is a block diagram of a control apparatus according to an embodiment of this application; and
FIG. 13 is another block diagram of a control apparatus according to an embodiment of this application.

### DESCRIPTION OF EMBODIMENTS

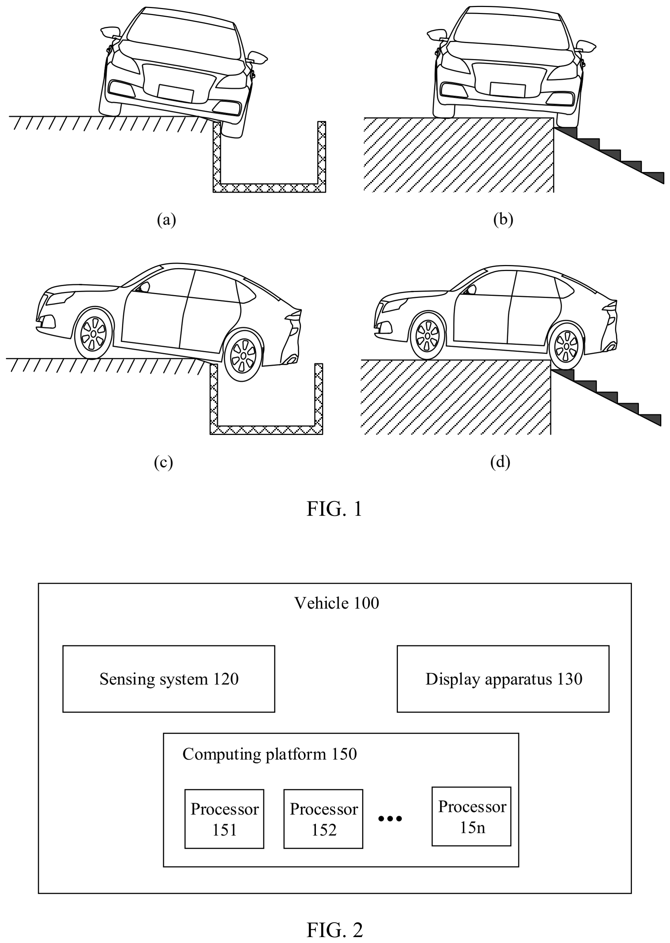

As described above, a current automatic parking system cannot identify a negative obstacle whose highest point is lower than a plane on which a vehicle is located, for example, a ditch, a manhole hole, or a ground collapse. As a result, route planning cannot be performed based on this type of obstacle during parking, and vehicle falling is likely to occur. For example, as shown in (a) to (d) in FIG. 1, one or two wheels on a side (for example, a left side, a right side, a front side, or a rear side) of a vehicle fall into a negative obstacle, causing a scratch on a chassis of the vehicle, and even causing the entire vehicle to fall into the negative obstacle. This poses a serious threat to the safety of the vehicle and a driver and a passenger.

In view of this, embodiments of this application provide a control method and apparatus, and an intelligent driving device, to identify a negative obstacle, and control a speed and/or a pose of a vehicle based on a position of the negative obstacle, or to indicate related information of the negative obstacle, to improve safety of the vehicle during traveling or parking and ensure personal and property safety of a user.

The intelligent driving device in this application may include a land transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the vehicle may be a transportation means, for example, an airplane or a ship.

The following describes technical solutions of this application with reference to accompanying drawings.

FIG. 2 is a functional block diagram of a vehicle according to an embodiment of this application. As shown in FIG. 2, the vehicle 100 may include a sensing system 120, a display apparatus 130, and a computing platform 150. The sensing system 120 may include several sensors configured to sense information about an environment around the vehicle 100. For example, the sensing system 120 may include a positioning system. The positioning system may be a global positioning system (global positioning system, GPS), a BeiDou system, or another positioning system. For another example, the sensing system 120 may further include one or more of an inertial measurement unit (inertial measurement unit, IMU), a lidar, a millimeter-wave radar, an ultrasonic radar, and a camera apparatus.

Some or all of functions of the vehicle 100 may be controlled by the computing platform 150. The computing platform 150 may include processors 151 to 15n. The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function via a logical relationship of a hardware circuit. The logical relationship of the hardware circuit is constant or may be reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may include a memory. The memory is configured to store instructions. Some or all of the processors 151 to 15n may invoke the instructions in the memory, to implement a corresponding function.

The display apparatus 130 in a cockpit is mainly classified into two types. A first type is a vehicle-mounted display, and a second type is a projection display, for example, a head-up display (head-up display, HUD) apparatus. The vehicle-mounted display is a physical display, and is an important part of a vehicle-mounted infotainment system. A plurality of displays may be disposed in the cockpit, for example, a digital dashboard display and a central display. The head-up display is also referred to as a head-up display system. The head-up display is mainly configured to display driving information such as a speed and navigation on a display device (for example, a windshield) in front of a driver, to reduce line-of-sight transfer time of the driver, avoid a pupil change caused by a line-of-sight transfer of the driver, and improve traveling safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. The display apparatus may further include the interaction system 130, and may further include a human machine interface (human machine interface, HMI), configured to prompt a user with a planning mode switching status.

The vehicle 100 may include an advanced driving assistant system (advanced driving assistant system, ADAS). The ADAS obtains information around the vehicle using a plurality of types of sensors (including but not limited to the lidar, the millimeter-wave radar, the camera apparatus, an ultrasonic sensor, the global positioning system, and the inertial measurement unit) in the vehicle, and analyzes and processes the obtained information, to implement functions such as obstacle sensing, target recognition, vehicle positioning, route planning, and driver monitoring/reminder. This improves driving safety, automation, and comfort of the vehicle.

In terms of logical functions, the ADAS system usually includes three main functional modules: a sensing module, a decision-making module, and an execution module. The sensing module senses an environment around a vehicle body by using a sensor, and inputs corresponding real-time data to a processing center of a decision-making layer. The sensing module mainly includes a vehicle-mounted camera, an ultrasonic radar, a millimeter-wave radar, a lidar, or the like. The decision-making module uses a computing apparatus and an algorithm to make a corresponding decision based on information obtained by the sensing module. After receiving a decision signal from the decision-making module, the execution module takes a corresponding action, for example, driving, a lane change, steering, braking, or warning.

At different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). L0 indicates no automation, L1 indicates driving support, L2 indicates partial automation, L3 indicates conditional automation, L4 indicates high automation, and L5 indicates full automation. Tasks of monitoring and responding to road conditions at the levels L1 to L3 are jointly completed by the driver and a system, and the driver needs to take over a dynamic driving task. The levels L4 and L5 enable the driver to be completely transformed into a passenger. Currently, functions that can be implemented by the ADAS mainly include but are not limited to adaptive cruise, automatic emergency braking, automatic parking, blind spot monitoring, traffic warning/braking at front crossroads, traffic warning/braking at rear crossroads, preceding vehicle collision warning, lane departure warning, lane keeping assistance, trailing vehicle anti-collision warning, traffic sign recognition, traffic jam assistance, highway assistance, and the like. It should be understood that the foregoing functions may have specific modes at different autonomous driving levels (L0 to L5). A higher autonomous driving level corresponds to a more intelligent mode. For example, automatic parking may include APA, RPA, and AVP. For APA, the driver does not need to operate a steering wheel, but still needs to operate on the vehicle to monitor a vehicle status in real time. For RPA, the driver may remotely park the vehicle outside the vehicle by using a terminal (for example, a mobile phone). For AVP, the vehicle may complete parking without the driver. In terms of the corresponding autonomous driving levels, the APA is approximately at the level L2, the RPA is approximately at the level L2 or L3, and the AVP is approximately at the level L4.

In this embodiment of this application, the computing platform 150 may control a speed and a pose of the vehicle based on information about a negative obstacle obtained by the sensing system 120, and/or prompt the user with existence of the negative obstacle.

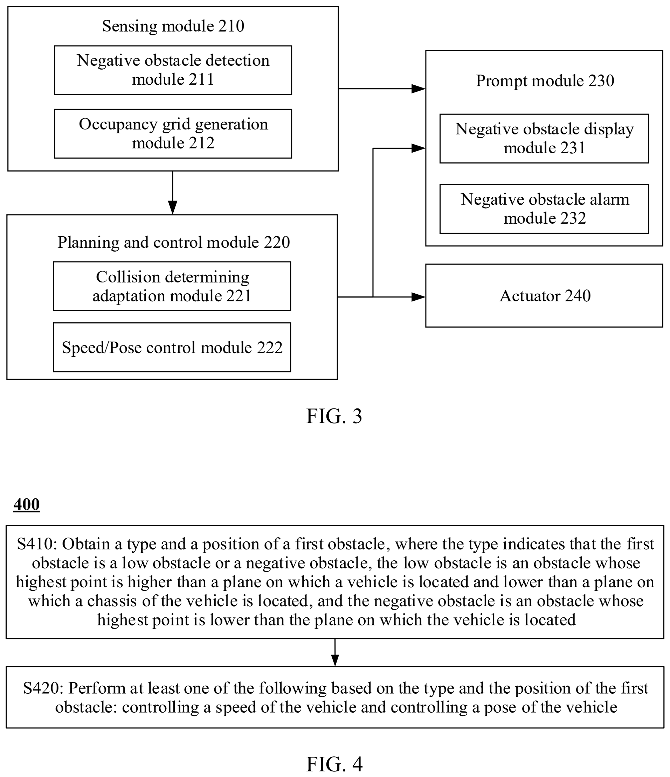

FIG. 3 is a diagram of an architecture of a control system according to an embodiment of this application. As shown in FIG. 3, the system includes a sensing module 210, a planning and control module 220, a prompt module 230, and an actuator 240. The sensing module 210 may include one or more sensors in the sensing system 120 and one or more processors in the computing platform 150 shown in FIG. 2. The sensing module 210 may include a negative obstacle detection module 211 and an occupancy grid generation module 212. The planning and control module 220 may include one or more processors in the computing platform 150 shown in FIG. 2, and the planning and control module 220 includes a collision determining adaptation module 221 and a speed/pose control module 222. The prompt module 230 may include one or more apparatuses in the display apparatus 130 shown in FIG. 2, and may further include a sound-making apparatus like a speaker or a sound box. The prompt module 230 includes a negative obstacle display module 231 and a negative obstacle alarm module 232. The actuator 240 may include a chassis, a steering system, and a braking control system in the vehicle 100.

The negative obstacle detection module 211 is configured to detect a position of a negative obstacle in a first area. The first area may be an area that the vehicle gradually approaches during traveling, or may be an area neighboring to a target parking area. The occupancy grid generation module 212 is configured to generate an occupancy grid map based on height information of the negative obstacle, and may further mark negative obstacles of different heights on the occupancy grid map. The sensing module 210 may separately input the position of the negative obstacle in the first area and a generated occupancy grid to the planning and control module 220 and the prompt module 230.

The collision determining adaptation module 221 may determine, based on information about the negative obstacle, a vehicle body area (or referred to as a collision determining area) used for obstacle collision detection, and then perform speed/pose planning based on the collision determining area. The speed/pose control module 222 is configured to control a pose and a speed of the vehicle based on the collision determining area determined by the collision determining adaptation module 221 and the position of the negative obstacle, so that the vehicle can brake when being close to the negative obstacle, thereby avoiding a risk of falling. The speed/pose control module 222 may calculate a corresponding control value based on the speed and the pose, and output the control value to the actuator 240. When the actuator 240 executes the control value, the vehicle is controlled to travel according to a planned route and/or the vehicle is controlled to be parked according to a planned pose.

The negative obstacle display module 231 is configured to display the position of the negative obstacle and/or a distance between the negative obstacle and the vehicle on a display interface. The negative obstacle alarm module 232 is configured to control, based on the position, of the negative obstacle, sent by the sensing module 210, the display interface to give an alarm prompt indicating that the vehicle has a risk of falling. The prompt module 230 may further display a distance between the negative obstacle and the collision determining area based on the collision determining area determined by the collision determining adaptation module 221.

It should be understood that the foregoing modules are merely examples. In actual application, the foregoing modules may be added or deleted based on an actual requirement. For example, the negative obstacle display module 231 and the negative obstacle alarm module 232 may be combined into one module.

With reference to FIG. 4 to FIG. 11, the following describes a specific procedure of the control method provided in embodiments of this application.

FIG. 4 is a schematic flowchart of a control method according to an embodiment of this application. The method 400 may be performed by the vehicle 100 shown in FIG. 2, or the method may be performed by the system shown in FIG. 3. The method 400 may include the following steps.

S410: Obtain a type and a position of a first obstacle, where the type indicates that the first obstacle is a low obstacle or a negative obstacle, the low obstacle is an obstacle whose highest point is higher than a plane on which a vehicle is located and lower than a plane on which a chassis of the vehicle is located, and the negative obstacle is an obstacle whose highest point is lower than the plane on which the vehicle is located.

In some possible implementations, the first obstacle is located in an area that the vehicle gradually approaches during traveling or in an area neighboring to a target parking area.

For example, the area that the vehicle gradually approaches during traveling may be determined based on a planned route of the vehicle, or may be determined based on a gear position and/or a steering wheel angle of the vehicle. The area that the vehicle gradually approaches during traveling may be located in a traveling direction of the vehicle. For example, when the vehicle travels in a "D" gear (drive, drive gear), the area may be an area located in front of a vehicle head. When the vehicle travels in an "R" gear (reverse, reverse gear), the area may be an area located in rear of a vehicle rear. The area that the vehicle gradually approaches during traveling may alternatively be located on a side of the vehicle. For example, the area may be located on a left side of the vehicle, or the area may be located on a right side of the vehicle.

For example, the area neighboring to the target parking area may be an area adjacent to any one of four boundaries of the target parking area.

For example, the plane on which the vehicle is located may be a plane on which lowest points of all wheels of the vehicle are located. For example, the plane on which the vehicle is located may be the ground, or may be a vehicle-carrying plate of a mechanical parking space, or may be another plane.

S420: Perform at least one of the following based on the type and the position of the first obstacle: controlling a speed of the vehicle and controlling a pose of the vehicle.

In some possible implementations, the method further includes: obtaining a position of a high obstacle, and performing at least one of the following based on the position of the high obstacle: controlling the speed of the vehicle, controlling the pose of the vehicle, and prompting information associated with the high obstacle.

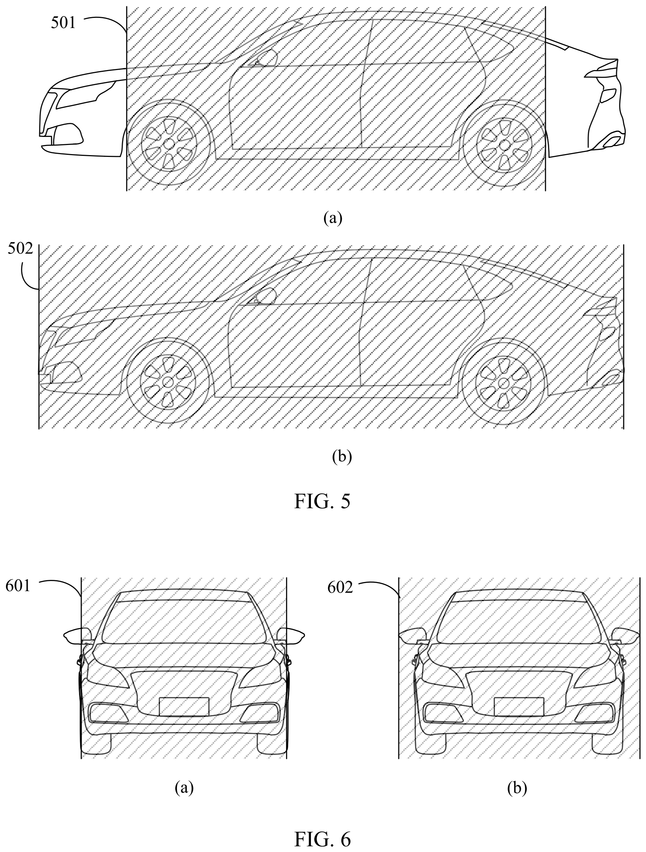

For example, controlling the speed and/or the pose of the vehicle based on a position of an obstacle may include: controlling the speed and/or the pose of the vehicle based on a distance between the obstacle and the vehicle. When the distance between the obstacle and the vehicle is determined, different types of obstacles correspond to different areas for the vehicle to determine the distance. In an example, when the obstacle is located in front of or in rear of the vehicle, and the obstacle is a negative obstacle or a low obstacle, the speed and/or the pose of the vehicle are/is controlled based on a distance between the obstacle and a frontmost part of a front wheel or a rearmost part of a rear wheel of the vehicle. To be specific, an area 501 shown in (a) in FIG. 5 is used as an area for determining whether the vehicle collides with the obstacle (or whether the vehicle falls into an area of the negative obstacle, and the two areas are collectively referred to as a collision determining area in this application). In another example, when the obstacle is located in front of or in rear of the vehicle, and the obstacle is a high obstacle, the speed and/or the pose of the vehicle are/is controlled based on a distance between an outer contour of the vehicle and the obstacle. In other words, an area 502 shown in (b) in FIG. 5 is used as the collision determining area. In still another example, when the obstacle is located on a side (for example, a left side or a right side) of the vehicle, and the obstacle is a negative obstacle or a low obstacle, the speed and/or the pose of the vehicle are/is controlled based on a distance between the obstacle and an outermost contour of a left wheel or an outermost contour of a right wheel of the vehicle. In other words, an area 601 shown in (a) in FIG. 6 is used as the collision determining area. In still another example, when the obstacle is located on a side of the vehicle, and the obstacle is a high obstacle, the speed and/or the pose of the vehicle are/is controlled based on a distance between an outer contour of the vehicle and the obstacle. In other words, an area 602 shown in (b) in FIG. 6 is used as the collision determining area.

In some possible implementations, the first obstacle is a negative obstacle, and when the first obstacle is located in a traveling direction of the vehicle and a length of the first obstacle in the traveling direction of the vehicle is greater than or equal to a first preset threshold, or when the first obstacle is located on a side of the vehicle and a length of the first obstacle in a direction perpendicular to the traveling direction of the vehicle is greater than or equal to a second preset threshold, at least one of the following is performed based on the type and the position of the first obstacle: controlling the speed of the vehicle, controlling the pose of the vehicle, and indicating the information associated with the first obstacle.

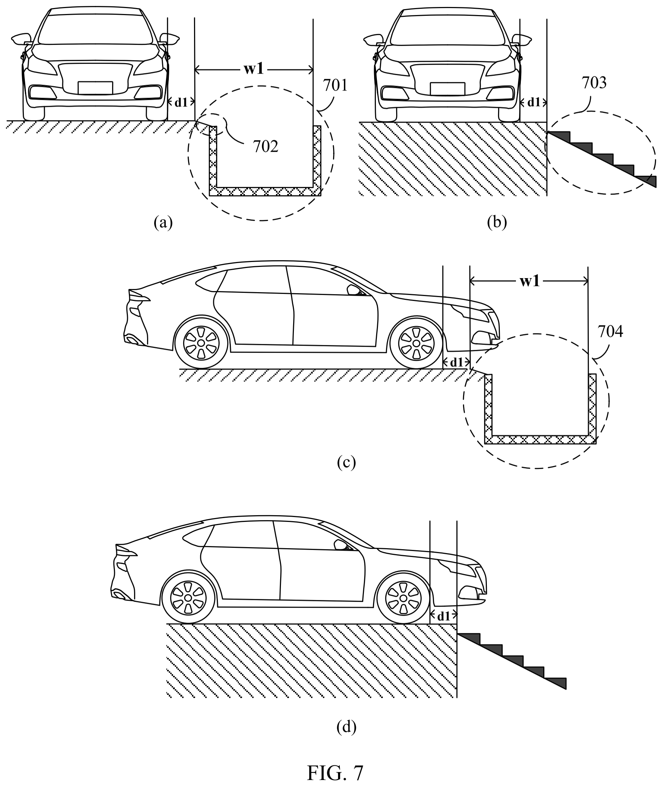

For example, if the length of the first obstacle in the traveling direction of the vehicle or the length of the first obstacle in a direction perpendicular to the traveling direction of the vehicle cannot be determined or detected, it is considered that the length is infinite. For example, if the first obstacle is an obstacle 701 in (a) in FIG. 7, the length of the first obstacle in a direction perpendicular to the traveling direction of the vehicle may be w1 shown in (a) in FIG. 7. For example, if the first obstacle is an obstacle 704 in (c) in FIG. 7, the length of the first obstacle in the traveling direction of the vehicle may be w1 shown in (c) in FIG. 7.

For example, the first preset threshold may be determined based on a wheel diameter and a chassis height of the vehicle. For example, the first preset threshold may be 20 centimeters, or may be another value. The second preset threshold may be a width of the wheel, or may be another value less than the width of the wheel.

In some possible implementations, for example, the first obstacle is an obstacle 702 or an obstacle 703 in FIG. 7, controlling the pose of the vehicle may include: controlling a distance between an external contour of a first wheel of the vehicle and the first obstacle to be greater than or equal to a first distance threshold, where the first wheel is a wheel that is in wheels of the vehicle and that is closest to the first obstacle.

Controlling the distance between the external contour of the first wheel and the first obstacle to be greater than or equal to the first distance threshold may include: controlling the distance between the external contour of the first wheel and the first obstacle to be greater than or equal to the first distance threshold during traveling of the vehicle, and/or controlling the distance between the external contour of the first wheel and the first obstacle to be greater than or equal to the first distance threshold after the vehicle stops.

For example, when the first obstacle is located on a side of the vehicle, the distance between the external contour of the first wheel and the first obstacle may be a distance between the first obstacle and a plane on which an outermost side in an axial direction of the first wheel is located, for example, d1 shown in (a) and (b) in FIG. 7. When the first obstacle is located in front of or in rear of the vehicle, the distance between the external contour of the first wheel and the first obstacle may be a distance between the first obstacle and an outermost side that is in a circumferential direction of the first wheel and that is away from the center point of the vehicle, for example, d1 shown in (c) and (d) in FIG. 7.

For example, the first distance threshold may be 30 centimeters, or may be 20 centimeters, or may be another value.

In some possible implementations, the first distance threshold varies with a type of the first obstacle and an area in which the first obstacle is located. For example, a relationship between the first distance threshold, the type of the first obstacle, and the area in which the first obstacle is located may be shown in Table 1.

**Table 1**

| Type of the first obstacle | Area in which the first obstacle is located | First distance threshold |
|---|---|---|
| Negative obstacle | A side surface of the vehicle, or an area neighboring to a longer boundary of the target parking area | 30 centimeters |
| Low obstacle | A side surface of the vehicle, or an area neighboring to a longer boundary of the target parking area | 30 centimeters |
| Negative obstacle | Front or rear of the vehicle, or an area neighboring to a shorter boundary of the target parking area | 5 to 20 centimeters (which may be specifically determined based on a wheel diameter) |
| Low obstacle | Front or rear of the vehicle, or an area neighboring to a shorter boundary of the target parking area | 30 centimeters |

In some possible implementations, the method further includes: obtaining a position of a second obstacle, where the second obstacle is a high obstacle and is located in a same area as the first obstacle, and the high obstacle is an obstacle whose highest point is higher than or equal to the plane on which the chassis of the vehicle is located; and controlling the pose of the vehicle includes: controlling the distance between the external contour of the first wheel of the vehicle and the first obstacle to be greater than or equal to the first distance threshold, and controlling a distance between a first part of an outer contour of the vehicle and the second obstacle to be greater than or equal to a second distance threshold, where the first part is a part that is in the outer contour and that is closest to the second obstacle.

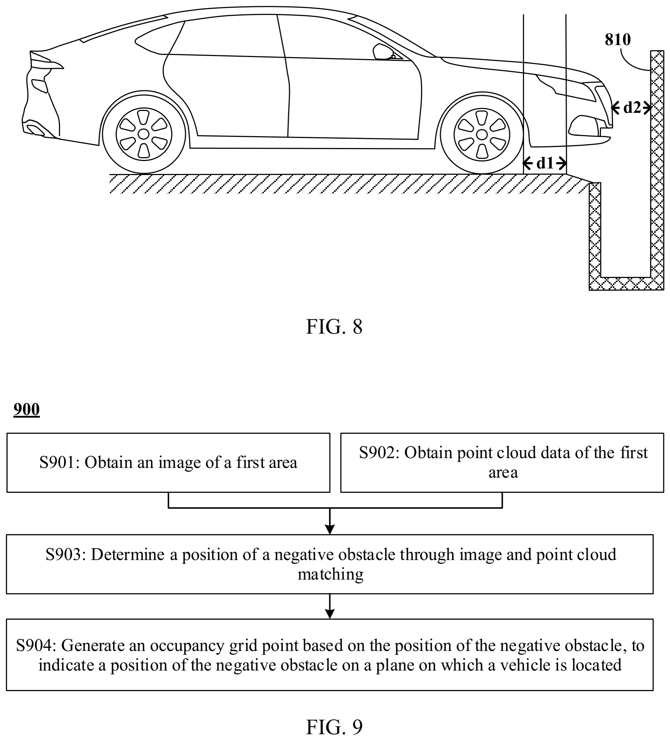

For example, as shown in FIG. 8, 810 is an example of the second obstacle, d1 is the distance between the external contour of the first wheel of the vehicle and the first obstacle, and d2 is the distance between the first part of the outer contour of the vehicle and the second obstacle. In this case, controlling the pose of the vehicle includes: controlling d1 to be greater than or equal to the first distance threshold, and d2 to be greater than or equal to the second distance threshold.

For example, the second distance threshold may be 30 centimeters, or may be 20 centimeters, or may be another value. The second distance threshold and the first distance threshold may be a same value, or may be different values.

In some possible implementations, the first obstacle is located on a first side of the target parking area, and controlling the pose of the vehicle includes: when the vehicle is parked into the target parking area, controlling a distance between a second part of the outer contour of the vehicle and a boundary on a second side of the target parking area to be greater than or equal to a third distance threshold, where the second side is a side opposite to the first side, and the second part is a side opposite to a side on which the first wheel is located.

For example, the target parking area is a vertical parking space, and the parking space is formed by two longer parking space lines and two shorter parking space lines. If the first side of the target parking area is a side of a longer parking space line of the parking space, the second side of the target parking area is a side of the other longer parking space line of the parking space. If the first side of the target parking area is a side of a shorter parking space line of the parking space, the second side of the target parking area is a side of the other shorter parking space line of the parking space.

For example, the third distance threshold may be 5 centimeters, 3 centimeters, or another value.

In some possible implementations, when a distance between the first obstacle and an external contour of a second wheel of the vehicle is greater than a fourth distance threshold, the vehicle is controlled to travel at a first acceleration, so that the speed of the vehicle is less than or equal to a first speed threshold when the distance between the first obstacle and the external contour of the second wheel is less than or equal to the fourth distance threshold, where the second wheel is a wheel that is in the wheels of the vehicle and that is closest to the first obstacle.

For example, the fourth distance threshold may be 1.5 meters, or may be 1 meter, or may be another value. The first speed threshold may be 0.2 meters/second, or may be 0.3 meters/second, or may be another value.

In some possible implementations, the method further includes: controlling a prompt apparatus to indicate information associated with the first obstacle. For example, the information associated with the first obstacle may include at least one of the following: the position of the first obstacle, a distance between the vehicle and the first obstacle, a height of the first obstacle, and a risk (for example, a risk of falling or collision) that may be caused by the first obstacle.

In an example, when the vehicle enables an automatic parking function or an autonomous driving function, the speed of the vehicle and/or the pose of the vehicle are/is controlled based on the type and the position of the first obstacle, to prevent a wheel or the vehicle from falling into the negative obstacle, or prevent a wheel of the vehicle from colliding with the low obstacle. When the vehicle enables the automatic parking function or the autonomous driving function, the information associated with the first obstacle may also be indicated, to prompt a driver to take over the vehicle.

In another example, when the vehicle does not enable an autonomous driving function or a driving assistance function, the information associated with the first obstacle is indicated based on the type and the position of the first obstacle, to prompt the driver with existence of the negative obstacle or the low obstacle, and reduce a probability that the vehicle falls or the vehicle collides with the low obstacle.

According to the control method provided in this embodiment of this application, the speed and/or the pose of the vehicle can be controlled based on the position of the negative obstacle and/or the position of the low obstacle, to prevent the vehicle from falling into the negative obstacle or colliding with the low obstacle. This helps improve driving safety or parking safety, and further improve personal and property safety of a user.

FIG. 9 is a schematic flowchart of a method for determining a negative obstacle in the method 900. The method 900 may be performed by the vehicle 100 shown in FIG. 2, or the method may be performed by the system shown in FIG. 3. The method 900 may be performed before the method 400, and the method 900 may include the following steps.

S901: Obtain an image of a first area.

For example, the first area may include an area in which the first obstacle is located.

S902: Obtain point cloud data of the first area.

S903: Determine a position of a negative obstacle through image and point cloud matching.

For example, the image of the first area is processed through visual semantic segmentation, to identify the position of the negative obstacle. The image is matched with the point cloud data, to determine the position of the negative obstacle at a point cloud layer.

S904: Generate an occupancy grid point based on the position of the negative obstacle, to indicate a position of the negative obstacle on a plane on which the vehicle is located.

For example, an occupancy grid map of an obstacle is generated based on a matched laser point cloud layer, a negative obstacle occupancy grid point is generated based on the position of the negative obstacle at the laser point cloud layer, and the negative obstacle occupancy grid point may indicate that the position of the negative obstacle corresponds to a position of the plane on which the vehicle is located.

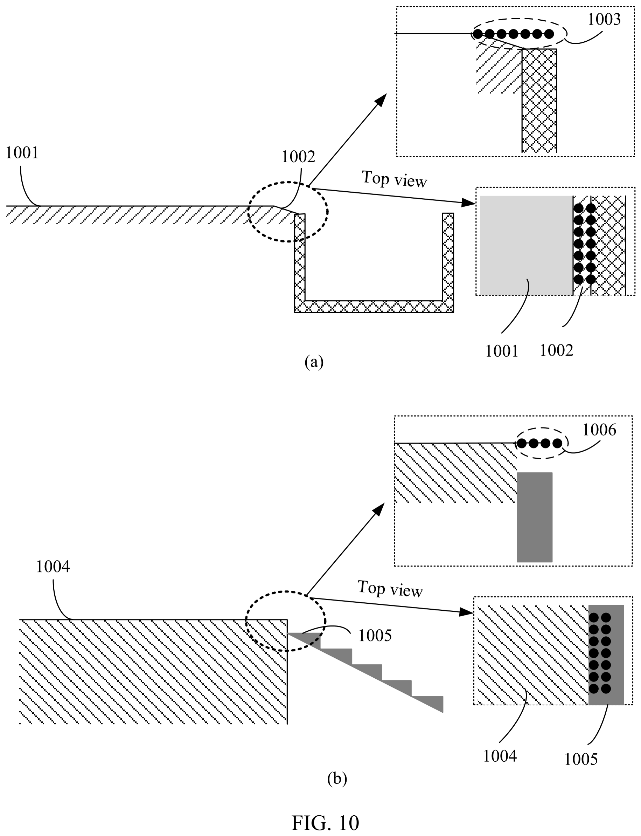

In an example, a height (depth) of the negative obstacle may be evaluated by using the image and/or the point cloud data. As shown in (a) in FIG. 10, 1001 is the plane on which the vehicle is located, and 1002 is an area in which the negative obstacle is located. In this case, a negative obstacle occupancy grid point 1003 may be generated on an equivalent horizontal plane of a plane 1001 on which the vehicle is located based on the area in which the negative obstacle is located. Alternatively, the negative obstacle occupancy grid point may be mapped to a positive obstacle occupancy grid point in the area in which the negative obstacle is located based on the height of the negative obstacle. The height of the positive obstacle is *z*' = |*z*|, where z is an actual measured height of the negative obstacle.

In another example, the height of the negative obstacle may be too large, and the height of the negative obstacle may not be determined by using the image or the point cloud data. As shown in (b) in FIG. 10, 1004 is the plane on which the vehicle is located, and 1005 is an area in which the negative obstacle is located. In this case, a negative obstacle occupancy grid point 1005 may be generated on an equivalent horizontal plane of a plane 1003 on which the vehicle is located based on the area in which the negative obstacle is located.

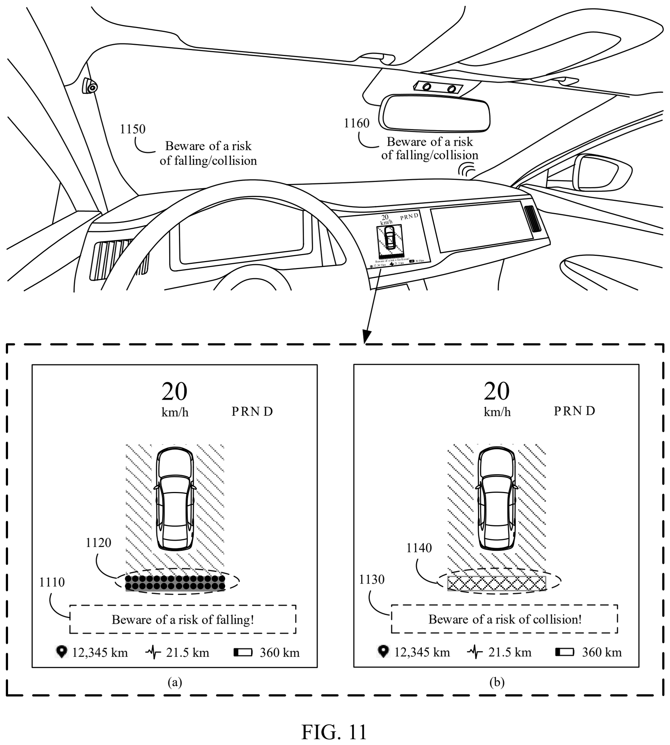

In some possible implementations, a virtual icon may be further generated based on the negative obstacle occupancy grid point, and the virtual icon is displayed by using a display apparatus like an HMI, to prompt a user with information associated with the negative obstacle. For example, as shown in (a) in FIG. 11, a text 1110 "Beware of a risk of falling" may be used to indicate that the vehicle may have a risk of falling due to a negative obstacle, and a virtual icon 1120 may be further displayed to indicate a position of the negative obstacle. For example, a distance between the vehicle and the negative obstacle may be further displayed in the HMI. The distance is a distance between the negative obstacle and a wheel closest to the negative obstacle in wheels of the vehicle, for example, d1 in the foregoing embodiment.

For example, when the height of the negative obstacle can be detected, height information of the negative obstacle may be further represented by using the virtual icon 1120. For example, when the height of the negative obstacle can be detected, the virtual icon 1120 is displayed by using a color 1; or when the height of the negative obstacle cannot be detected, the virtual icon 1120 is displayed by using a color 2.

In some possible implementations, when identifying a low obstacle or a high obstacle, the vehicle may alternatively prompt, by using the display apparatus, the user with information associated with the low/high obstacle. For example, as shown in (b) in FIG. 11, a text 1130 "Beware of a risk of collision" may be used to indicate that the vehicle may have a risk of collision due to a low/high obstacle, and a virtual icon 1140 may be further displayed to indicate a position of the low/high obstacle. For example, a distance between the vehicle and the low/high obstacle may be further displayed in the HMI. The distance is a distance between an outer contour of the vehicle and the low/high obstacle, for example, d2 in the foregoing embodiment.

In some possible implementations, the HUD may be used to indicate one or more of the foregoing information. As shown in FIG. 11, the HUD displays a text 1150 to indicate that the vehicle has a risk of falling or collision. Alternatively, a sound-making apparatus such as a speaker or a sound box may be used to indicate one or more of the foregoing information. As shown in FIG. 11, the sound-making apparatus broadcasts voice 1160 "Beware of a risk of falling/collision", to indicate that the vehicle has the risk of falling or collision.

In some possible implementations, the sound-making apparatus may further play different prompt tones to indicate a type of the obstacle. For example, when a low obstacle or a high obstacle is detected, the sound-making apparatus is controlled to play a first sound effect; or when a negative obstacle is detected, the sound-making apparatus is controlled to play a second sound effect.

In conclusion, this embodiment of this application provides a control method, to perform different control strategies on the vehicle based on the type of the obstacle. For example, a correspondence between the type of the obstacle and the control strategy may be shown in Table 2.

**Table 2**

| **Obstacle type** | High obstacle | Low obstacle | Negative obstacle | No obstacle |
|---|---|---|---|---|
| **Criteria** | The highest point is higher than or equal to a chassis, and the lowest point is lower than a roof of the vehicle or lower than a bonnet of the vehicle. | The highest point is higher than a plane on which the vehicle is located and lower than the chassis. | The highest point is lower than the plane on which the vehicle is located. | None |
| **Collision determining area** | Outer contour of the vehicle (body), as shown in 502 and 602 | An area formed by external contours of four wheels of the vehicle, as shown in 501 and 601 | | None |
| **Alarm voice information** | "Beware of a risk of collision" | | "Beware of a risk of falling" | No alarm |
| **Alarm prompt tone** | First sound effect | | Second sound effect | No prompt |

In embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

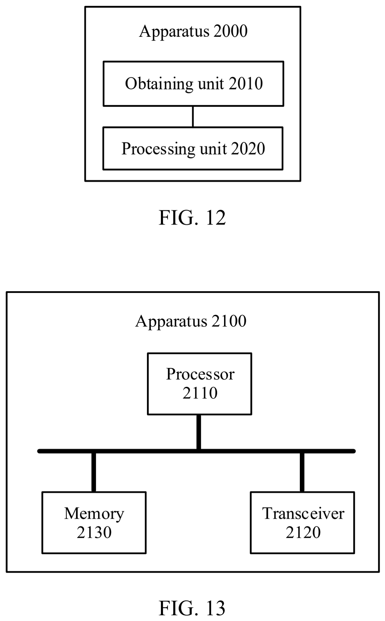

The foregoing describes in detail the control method provided in embodiments of this application with reference to FIG. 2 to FIG. 11. The following describes in detail the control apparatus provided in embodiments of this application with reference to FIG. 12 and FIG. 13. It should be understood that descriptions of control apparatus embodiments correspond to the descriptions of the method embodiments. Therefore, for content that is not described in detail, refer to the foregoing method embodiments. For brevity, details are not described herein again.

FIG. 12 is a block diagram of a control apparatus 2000 according to an embodiment of this application. The apparatus 2000 may include units configured to perform the methods in FIG. 4 and FIG. 9. In addition, the units in the apparatus 2000 are respectively configured to implement corresponding procedures of the method embodiments in FIG. 4 and FIG. 9.

The apparatus 2000 includes: an obtaining unit 2010, configured to obtain a type and a position of a first obstacle, where the type indicates that the first obstacle is a low obstacle or a negative obstacle, the low obstacle is an obstacle whose highest point is higher than a plane on which a vehicle is located and lower than a plane on which a chassis of the vehicle is located, and the negative obstacle is an obstacle whose highest point is lower than the plane on which the vehicle is located; and a processing unit 2020, configured to perform at least one of the following based on the type and the position of the first obstacle: controlling a speed of the vehicle and controlling a pose of the vehicle.

In some possible implementations, the processing unit 2020 is configured to: control a distance between an external contour of a first wheel of the vehicle and the first obstacle to be greater than or equal to a first distance threshold, where the first wheel is a wheel that is in wheels of the vehicle and that is closest to the first obstacle.

In some possible implementations, the obtaining unit 2010 is further configured to: obtain a position of a second obstacle, where the second obstacle is a high obstacle and is located in a same area as the first obstacle, and the high obstacle is an obstacle whose highest point is higher than or equal to the plane on which the chassis of the vehicle is located; and the processing unit 2020 is configured to: control the distance between the external contour of the first wheel of the vehicle and the first obstacle to be greater than or equal to the first distance threshold, and control a distance between a first part of an outer contour of the vehicle and the second obstacle to be greater than or equal to a second distance threshold, where the first part is a part that is in the outer contour and that is closest to the second obstacle.

In some possible implementations, the first obstacle is located on a first side of a target parking area, and the processing unit 2020 is configured to: when the vehicle is parked into the target parking area, control a distance between a second part of the outer contour of the vehicle and a boundary on a second side of the target parking area to be greater than or equal to a third distance threshold, where the second side is a side opposite to the first side, and the second part is a side opposite to a side on which the first wheel is located.

In some possible implementations, the first obstacle is the negative obstacle, and the processing unit 2020 is configured to: when the first obstacle is located in a traveling direction of the vehicle and a length of the first obstacle in the traveling direction of the vehicle is greater than or equal to a first preset threshold, or when the first obstacle is located on a side of the vehicle and a length of the first obstacle in a direction perpendicular to the traveling direction of the vehicle is greater than or equal to a second preset threshold, perform at least one of the following based on the type and the position of the first obstacle: controlling the speed of the vehicle and controlling the pose of the vehicle.

In some possible implementations, the processing unit 2020 is configured to: when a distance between the first obstacle and an external contour of a second wheel of the vehicle is greater than a fourth distance threshold, control the vehicle to travel at a first acceleration, so that the speed of the vehicle is less than or equal to a first speed threshold when the distance between the first obstacle and the external contour of the second wheel is less than or equal to the fourth distance threshold, where the second wheel is a wheel that is in the wheels of the vehicle and that is closest to the first obstacle.

In some possible implementations, the processing unit 2020 is further configured to: when the first obstacle is the low obstacle, control a sound-making apparatus to play a first sound effect; or when the first obstacle is the negative obstacle, control the sound-making apparatus to play a second sound effect.

In some possible implementations, the first obstacle is the negative obstacle, and the processing unit 2020 is further configured to perform at least one of the following: controlling a prompt apparatus to indicate a distance between the vehicle and the first obstacle; controlling the prompt apparatus to indicate the position of the first obstacle; or controlling the prompt apparatus to indicate that the vehicle has a risk of falling.

In some possible implementations, the apparatus 2000 further includes a generation unit, configured to: generate a virtual icon based on height information of the first obstacle, where the virtual icon indicates a height of the first obstacle and the position that is of the first obstacle and that corresponds to a position of the plane on which the vehicle is located; and the processing unit 2020 is configured to: control the prompt apparatus to display the virtual icon.

For example, the obtaining unit 2010 and the processing unit 2020 may be disposed in the system shown in FIG. 3. More specifically, the obtaining unit 2010 and the processing unit 2020 may be disposed in the planning and control module 220. For example, operations performed by the obtaining unit 2010 and the processing unit 2020 may be performed by one processor, or may be performed by different processors. In a specific implementation process, the one or more processors may be processors disposed in the vehicle 100 shown in FIG. 2, or the apparatus 2000 may be a chip disposed in the vehicle 100.

In a specific implementation process, all or some of the units of the apparatus may be integrated, or may be implemented independently. In an implementation, these units are integrated together and implemented in a form of a system-on-a-chip (system-on-a-chip, SoC).

FIG. 13 is a block diagram of a control apparatus according to an embodiment of this application. A control apparatus 2100 shown in FIG. 13 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, to implement the methods in the foregoing embodiments. Optionally, the memory 2130 may be coupled to the processor 2110 through an interface, or may be integrated with the processor 2110.

It should be noted that the transceiver 2120 may include but is not limited to a transceiver apparatus of an input/output interface (input/output interface) type, to implement communication between the apparatus 2100 and another device or a communication network.

The memory 2130 may be a read-only memory (read-only memory, ROM), a static storage device, a dynamic storage device, or a random access memory (random access memory, RAM).

The transceiver 2120 uses, for example, but is not limited to, a transceiver apparatus of a transceiver type, to implement communication between the apparatus 2100 and another device or a communication network, to receive/send data/information used to implement the methods in the foregoing embodiments.

An embodiment of this application further provides an intelligent driving device. The intelligent driving device includes the control apparatus 2000 or the control apparatus 2100 in the foregoing embodiments.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish between different described objects, and do not limit locations, a sequence, priorities, quantities, content, or the like of the described objects. Use of prefix words such as ordinal numbers used to distinguish between the described objects in embodiments of this application does not constitute a limitation on the described objects. For descriptions of the described objects, refer to the context descriptions in the claims or embodiments. The use of such prefix words should not constitute a redundant limitation.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
obtaining a type and a position of a first obstacle, wherein the type indicates that the first obstacle is a low obstacle or a negative obstacle, the low obstacle is an obstacle whose highest point is higher than a plane on which a vehicle is located and lower than a plane on which a chassis of the vehicle is located, and the negative obstacle is an obstacle whose highest point is lower than the plane on which the vehicle is located; and
performing at least one of the following based on the type and the position of the first obstacle: controlling a speed of the vehicle and controlling a pose of the vehicle.

2. The method according to claim 1, wherein controlling the pose of the vehicle comprises:
controlling a distance between an external contour of a first wheel of the vehicle and the first obstacle to be greater than or equal to a first distance threshold, wherein the first wheel is a wheel that is in wheels of the vehicle and that is closest to the first obstacle.

3. The method according to claim 2, wherein the method further comprises:
obtaining a position of a second obstacle, wherein the second obstacle is a high obstacle and is located in a same area as the first obstacle, and the high obstacle is an obstacle whose highest point is higher than or equal to the plane on which the chassis of the vehicle is located; and
controlling the distance between the external contour of the first wheel of the vehicle and the first obstacle to be greater than or equal to the first distance threshold comprises:
controlling the distance between the external contour of the first wheel of the vehicle and the first obstacle to be greater than or equal to the first distance threshold, and controlling a distance between a first part of an outer contour of the vehicle and the second obstacle to be greater than or equal to a second distance threshold, wherein the first part is a part that is in the outer contour and that is closest to the second obstacle.

4. The method according to claim 2 or 3, wherein the first obstacle is located on a first side of a target parking area, and controlling the pose of the vehicle comprises:
when the vehicle is parked into the target parking area, controlling a distance between a second part of the outer contour of the vehicle and a boundary on a second side of the target parking area to be greater than or equal to a third distance threshold, wherein the second side is a side opposite to the first side, and the second part is a side opposite to a side on which the first wheel is located.

5. The method according to any one of claims 1 to 4, wherein the first obstacle is the negative obstacle, and performing at least one of the following: controlling the speed of the vehicle and controlling the pose of the vehicle comprises:
when the first obstacle is located in a traveling direction of the vehicle and a length of the first obstacle in the traveling direction of the vehicle is greater than or equal to a first preset threshold, or when the first obstacle is located on a side of the vehicle and a length of the first obstacle in a direction perpendicular to the traveling direction of the vehicle is greater than or equal to a second preset threshold, performing at least one of the following based on the position of the first obstacle: controlling the speed of the vehicle and controlling the pose of the vehicle.

6. The method according to any one of claims 1 to 5, wherein controlling the speed of the vehicle comprises:
when a distance between the first obstacle and an external contour of a second wheel of the vehicle is greater than a fourth distance threshold, controlling the vehicle to travel at a first acceleration, so that the speed of the vehicle is less than or equal to a first speed threshold when the distance between the first obstacle and the external contour of the second wheel is less than or equal to the fourth distance threshold, wherein the second wheel is a wheel that is in the wheels of the vehicle and that is closest to the first obstacle.

7. The method according to any one of claims 1 to 6, wherein the method further comprises:
when the first obstacle is the low obstacle, controlling a sound-making apparatus to play a first sound effect; or
when the first obstacle is the negative obstacle, controlling the sound-making apparatus to play a second sound effect.

8. The method according to any one of claims 1 to 7, wherein the first obstacle is the negative obstacle, and the method further comprises at least one of the following:
controlling a prompt apparatus to indicate a distance between the vehicle and the first obstacle;
controlling the prompt apparatus to indicate the position of the first obstacle; or
controlling the prompt apparatus to indicate that the vehicle has a risk of falling.

9. The method according to any one of claims 1 to 8, wherein the method further comprises:
generating a virtual icon based on height information of the first obstacle, wherein the virtual icon indicates a height of the first obstacle and the position that is of the first obstacle and that corresponds to a position of the plane on which the vehicle is located; and
controlling the prompt apparatus to display the virtual icon.

10. A control apparatus, comprising:
an obtaining unit, configured to obtain a type and a position of a first obstacle, wherein the type indicates that the first obstacle is a low obstacle or a negative obstacle, the low obstacle is an obstacle whose highest point is higher than a plane on which a vehicle is located and lower than a plane on which a chassis of the vehicle is located, and the negative obstacle is an obstacle whose highest point is lower than the plane on which the vehicle is located; and
a processing unit, configured to perform at least one of the following based on the type and the position of the first obstacle: controlling a speed of the vehicle and controlling a pose of the vehicle.

11. The apparatus according to claim 10, wherein the processing unit is configured to:
control a distance between an external contour of a first wheel of the vehicle and the first obstacle to be greater than or equal to a first distance threshold, wherein the first wheel is a wheel that is in wheels of the vehicle and that is closest to the first obstacle.

12. The apparatus according to claim 11, wherein the obtaining unit is further configured to:
obtain a position of a second obstacle, wherein the second obstacle is a high obstacle and is located in a same area as the first obstacle, and the high obstacle is an obstacle whose highest point is higher than or equal to the plane on which the chassis of the vehicle is located; and
the processing unit is configured to:
control the distance between the external contour of the first wheel of the vehicle and the first obstacle to be greater than or equal to the first distance threshold, and control a distance between a first part of an outer contour of the vehicle and the second obstacle to be greater than or equal to a second distance threshold, wherein the first part is a part that is in the outer contour and that is closest to the second obstacle.

13. The apparatus according to claim 11 or 12, wherein the first obstacle is located on a first side of a target parking area, and the processing unit is configured to:
when the vehicle is parked into the target parking area, control a distance between a second part of the outer contour of the vehicle and a boundary on a second side of the target parking area to be greater than or equal to a third distance threshold, wherein the second side is a side opposite to the first side, and the second part is a side opposite to a side on which the first wheel is located.

14. The apparatus according to any one of claims 10 to 13, wherein the first obstacle is the negative obstacle, and the processing unit is configured to:
when the first obstacle is located in a traveling direction of the vehicle and a length of the first obstacle in the traveling direction of the vehicle is greater than or equal to a first preset threshold, or when the first obstacle is located on a side of the vehicle and a length of the first obstacle in a direction perpendicular to the traveling direction of the vehicle is greater than or equal to a second preset threshold, perform at least one of the following based on the position of the first obstacle: controlling the speed of the vehicle and controlling the pose of the vehicle.

15. The apparatus according to any one of claims 10 to 14, wherein the processing unit is configured to:
when a distance between the first obstacle and an external contour of a second wheel of the vehicle is greater than a fourth distance threshold, control the vehicle to travel at a first acceleration, so that the speed of the vehicle is less than or equal to a first speed threshold when the distance between the first obstacle and the external contour of the second wheel is less than or equal to the fourth distance threshold, wherein the second wheel is a wheel that is in the wheels of the vehicle and that is closest to the first obstacle.

16. The apparatus according to any one of claims 10 to 15, wherein the processing unit is further configured to:
when the first obstacle is the low obstacle, control a sound-making apparatus to play a first sound effect; or
when the first obstacle is the negative obstacle, control the sound-making apparatus to play a second sound effect.

17. The apparatus according to any one of claims 10 to 16, wherein the first obstacle is the negative obstacle, and the processing unit is further configured to perform at least one of the following:
controlling a prompt apparatus to indicate a distance between the vehicle and the first obstacle;
controlling the prompt apparatus to indicate the position of the first obstacle; or
controlling the prompt apparatus to indicate that the vehicle has a risk of falling.

18. The apparatus according to any one of claims 10 to 17, wherein the apparatus further comprises a generation unit, configured to:
generate a virtual icon based on height information of the first obstacle, wherein the virtual icon indicates a height of the first obstacle and the position that is of the first obstacle and that corresponds to a position of the plane on which the vehicle is located; and
the processing unit is configured to: control the prompt apparatus to display the virtual icon.

19. A control apparatus, comprising:
a memory, configured to store a computer program; and
a processor, configured to execute the computer program stored in the memory, to enable the control apparatus to perform the method according to any one of claims 1 to 9.

20. An intelligent driving device, comprising the control apparatus according to any one of claims 10 to 19.

21. A computer-readable storage medium, wherein the computer-readable storage medium stores instructions, and when the instructions are executed by a processor, the processor is enabled to implement the method according to any one of claims 1 to 9.

22. A chip, wherein the chip comprises a circuit, and the circuit is configured to perform the method according to any one of claims 1 to 9.
